# EUROPEAN PATENT SPECIFICATION

(11) **EP 0 542 936 B1**
(45) Date of publication and mention of the grant of the patent: **25.10.1995**
(21) Application number: 92907549.7
(22) Date of filing: 06.03.1992
(51) Int. Cl.: B60C 27/10

(54) **HOOK FOR AN ANTI-SKID DEVICE FOR MOTOR-VEHICLES**
SPANNHAKEN FÜR GLEITSCHUTZKETTEN FÜR KRAFTFAHRZEUGE
CROCHET POUR UN DISPOSITIF ANTIDERAPANT POUR VEHICULES A MOTEUR

(30) Priority: 08.03.1991 IT MI91061
(43) Date of publication of application: 26.05.1993
(73) Proprietor: FELLINI, Marco, I-47020 Roncofreddo Forli (IT)
(72) Inventor: FELLINI, Marco, I-47020 Roncofreddo Forli (IT)
(74) Representative: Mascioli, Alessandro, Prof.Dr.
(86) International application number: IT9200025
(87) International publication number: WO9215464

(56) References cited:
- CH-A- 364 704
- FR-A- 1 091 848
- FR-A- 2 056 534
- US-A- 1 472 448
- US-A- 2 987 092

## Description

The present invention concerns an anti-skid device that may be applied to the drive wheels, in particular on the front-wheel drive vehicles, in which a wheel comprises a metal rim to which a tyre is applied, and a first and respectively a second hooking element that gets engaged on the two opposite sides of the rim without previous modifications of said wheel like the insertion of unstable adapters between said tyre and the rim and the welding of buttons of said rim, and at least one connection chain that is placed across the tyre, said chain being connected to the first hooking element, respectively to a traction lever hinged to the second hooking element as well as for blocking the rotation of the traction lever in the tensed condition of the chain.

As it is well known, on innevated streets oftenly the use of appropriate tyre-chains, of different possible shapes, are requested; a conventional tyre-chain provides a plurality of chain segments that are placed across the tyre, along the circumference of the vehicle's tyre.

The prior art shows the following patents concerning the application of anti-skid devices to rims with tyres of vehicles:
- US-A-2 987 092, that makes use of holds (figures 4-46), that request a laborious preparation of the wheel and which may get unhooked, if left in their seats, at high speeds;
- CH-A-364 704 which, after a first unreliable project, suggests buttoms (figures 4, 12-13) welded to the rim, to which the brackets of the chain may be hooked;
- FR-A-1 091 848 that suggests two hooks without a particular protection, that may be easily get unhooked during use;
- FR-A-2 056 534, that does not suggest particular hookings to the edge of the rim.

Furthermore, between the cited prior art, the patents of Marcanello US-A-2 987 092, Rochat CH-A-364 704 and Mosca FR-A-1 091 848 make use of known levers of small dimensions placed at the height of the tyre (which is a rather critical position) and are therefore subject to strong stresses during use with great risks of opening, breaking and unhooking.

Even if a plurality of solutions have been suggested and adopted, usually the application and the removal of the conventional chains is rather difficult and bothersome, beyond requesting a particular ability or practice and a certain amount of time; for these reasons, on many occasions people renounce to apply them with a strong risk and danger for the driver and the passengers of the vehicle. Furthermore, for short innevated streets, or for an occasional use of the vehicle, people often renounce to the application of the tyre-chains for the bothering of the operation, thus accepting to run the unavoidable risks.

It is the aim of the present invention to provide an anti-skid device that may be used in case of need or that may replace the conventional tyre-chains, that may be easily applied and removed from the wheels of a vehicle, in particular provided for front-wheel drive vehicles, that does not request any complicated operation but only a little time for applying and removing, in which the wheel comprises a metal rim with a tyre, without previous modifications of said wheel, like the insertion of unstable adapters between said tyre and the rim as in said patent US-A-2 987 092, or the welding of buttons onto said rim as in patent CH-A-363 704. By applying a plurality of anti-skid devices according to the present invention at different angles on each drive wheel, the driver may afford a safe journey even along long innevated roads, without the risks implied by the non-utilization of tyre-chains.

The anti-skid device for the drive wheels according to the present invention is characterized in that the second hooking element is provided with a stabilizing tab for engagement with a ventilation hole and a clip for engagement with the circumference of the rim the stabilizing tab being provided with springs so as to determine a repelling force between the hole and the circumference of the rim.

A preferred embodiment of the anti-skid device according to the present invention will be described in detail hereinbelow relating to the enclosed drawing, in which:
figure 1 shows a section view of a part of a common wheel with an anti-skid device according to the prior art,
figure 2 is a front view of a preferred embodiment of a first hooking element according to the present invention;
figure 3 is a lateral view of figure 2;
figure 4 is an axonometric view of a second hooking element according to the invention; and
figure 5 shows the anti-skid device applied on a tyre.

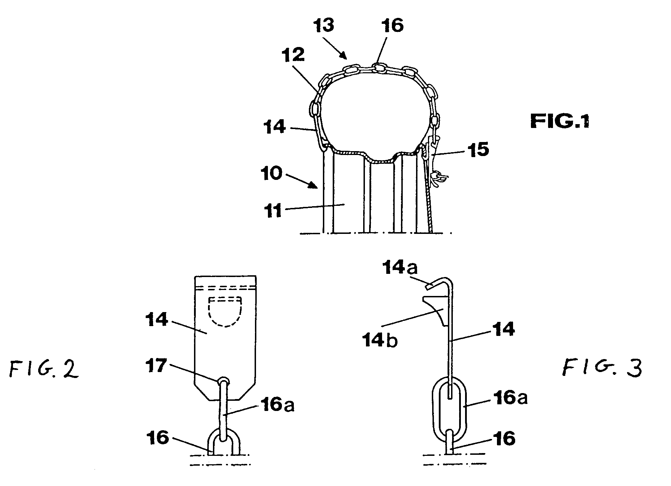

Figure 1 shows a common wheel (10) of a vehicle, comprising a metal rim (11) provided with a tyre (12) in a known manner; (13) generally shows in figure 1 an anti-skid device applied across the tyre (12) and hooked on the two opposite sides of rim (11).

In particular, as shown in figures 2 and 3, the anti-skid device according to the present invention comprises a first hooking element (14), having e.g. the shape of a small plate having one end (14a) folded like a hook, and a shaped finger (14b) for the protection of the tyre. Furthermore fig. 1 shows a second hooking element (15) connected to the first one by a ring chain portion (16) that is transversally placed across the tyre (12).

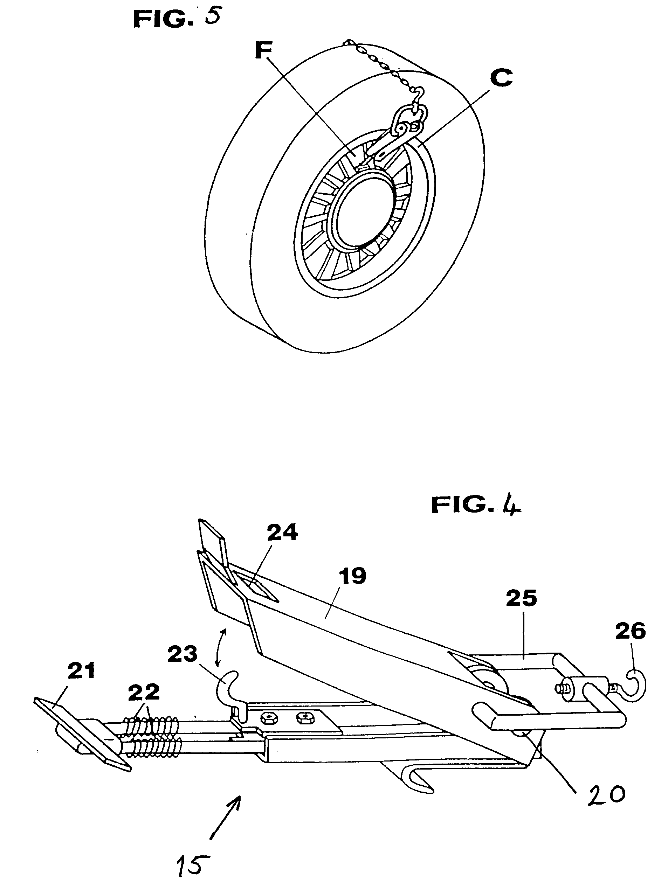

As a blocking element any appropriate means may be used, e.g. providing a placement beyond a dead point of the articulation of the ring (25) with respect to the hinging (20) of lever (19), so that the driving forces act in the sense of pulling the lever towards and against the hooking element (15), as shown in fig. 4.

In the shown case, the two hooking elements (14) and (15) are connected by one single chain of chain portion (16); however, if requested, it is possible to appropriately shape, e.g., hooking element (14) and ring (25) providing for a coupled disposition at a short distance of one or two chain portions, so as to increase the efficency of taking on the snow.

The application of the anti-skid device according to the present invention e.g. to a front-drive wheel of a vehicle, is substantially the as follows: after having turned the wheel outwardly, the first hooking element (14) is hooked to the external edge of rim (11), passing the chain (16) across the tyre (12); now the traction lever (19) is rotated upwardly so as to engage the second hooking element (15) on the other side of the rim (11), e.g. in correspondence to an opening or a ventilation hole usually provided on the rims of vehicle wheels. Once the second hooking element (15) is hooked on the external side of the rim (11), lever (19) is lowered towards and against the hooking element, thus putting chain (16) in tension. Lever (19) is now blocked in the tensed condition of the chain.

From what described and shown above, an anti-skid device has been provided of easy application and removal, that may be used for replacing the conventional tyre-chains, so as to make more comfortable and safe a journey along innevated roads, that does not request the driver a any waste of time for the application and the removal of said anti-skid device.

It evident that a plurality of anti-skid devices may be provided with a chain portions of different lenght, adapted to the different kinds of wheels.

As shown in fig. 4 and 5 the anti-skid device according to the invention is provided with a stabilizing tab (21), provided with springs (22) so as to determine a repelling force between the hole (F) and the circumference (C) of the rim.

The lever (19) shows a safety lock consisting in projection (23) that gets engaged in eyelet (24).

Furthermore, the last ring (25) of the chain is provided with an adjustable hook (26) for partially balancing the width variations of the tyre.

## Claims

1. An anti-skid device for drive wheels of vehicles in which a wheel (10) comprises a metal rim (11) to which a tyre (12) is applied, and a first (14) and respectively a second hooking element (15) that gets engaged on the two opposite sides of the rim (11) without previous modifications of said wheel (10) like the insertion of unstable adapters between said tyre (12) and the rim (11) and the welding of buttoms of said rim (11), and at least one connection chain (16) that is placed across the tyre (12), said chain (16) being connected to the first hooking element (14), respectively to a traction lever (19) hinged to the second hooking element (15) as well as means (23) for blocking the rotation of the traction lever (19) in the tensed condition of the chain (16), **characterized in that** the second hooking element (15) is provided with a stabilizing tab (21) for engagement with a ventilation hole (F) and a clip for engagement with the circumference (C) of the rim (11), the stabilizing tab (21) being provided with springs (22) so as to determine a repelling force between the hole (F) and the circumference (C) of the rim (11).

2. An anti-skid device according to claim 1, **characterized in that** said first hooking element (14) that will engage the internal edge of the rim (11), shows in corresondence to its end folded like a hook a shaped protection finger (14b) that gets adapted against the side of said tyre (12).

3. An anti-skid device according to claim 1, **characterized in that** said means for blocking the rotation of the lever (19) in the tensed condition of the chain (16), comprise a disposition beyond said point of the chain (16) articulation to the traction lever (19) with respect to the rotation axis of said lever (19).

4. An anti-skid device according to the one or more of the precedent claims, **characterized in that** it comprises at least two chains placed one near the other, connected between the mentioned hooking elements (14, 15).

5. An anti-skid device according to any of the precedent claims, **characterized in that** it comprises means for adjusing the length of the hook for varying the distance between the connection points between the chain (16) and the hooking elements, as the moving of the ring's (25) articulation along different points provided on grooved edges of both sides of the traction lever (19).

6. An anti-skid device according to claim 6, **characterized in that** said adjusting means comprise articulation points distanced on the traction lever (19), as well as means for engaging and disengaging said chain (16) to and from said lever (19) in correspondence to said articulation points.

## Patentansprüche

1. Gleitschutzketten für Antriebräder von Fahrzeugen, wobeiein Rad (10) aus einem Radkranz (11) aus Metall besteht, auf dem ein Gummischlauch (12) und ein erstes Hakenelement (14) und ein zweites Hakenelement (15) angebracht wird, das mit den beiden gegenüberliegenden Seiten des Radkranzes (11) im Eingriff steht, ohne dabei vorher das Rad (10) abgeändert zu haben, zum Beispiel durch die Anwendung von veränderlichen Verbindungsstücken zwischen dem Gummischlauch (12) und dem Radkranz (11), und dem Aufschweißen einer Blocktaste auf dem Radkranz (11), und wenigstens einer Verbindungskette (16), die durch den Gummischlauch (12) gehend vorgesehen ist, wobei diese Kette (16) mit dem ersten Hakenelement (14) beziehungsweise einem Zughebel (19) verbunden ist, der gelenking mit dem zweiten Hakenelement (15) verbunden ist, außer Elementen (23), die die Umdrehung des Zughebels (19) dann verhindern, wenn die Kette (16) gespannt ist, dadurch gekennzeichnet, daß das zweite Hakenelement (15) mit einem stabilisierenden Vorsprung (21) versehen ist, zum Eingriff in ein Entlüftungsloch, (21) und einer Klemme zum Eingriff auf den Kreisumfang (C) des Radkranzes (11), und zwar gerade da, wo der stabilisierende Vorsprung (21) seinerseits mit Federn (22) versehen ist, um eine rücktreibende Kraft zwischen dem Loch (F) und dem Kreisumfang (C) des Radkranzes (11) zu bilden.

2. Gleitschutzketten nach Anspruch 1, dadurch gekennzeichnet, daß das erste Hakenelement (14), das auf den inneren Rand des Radkranzes (11) eingreift, mit seinem hakenförmig gebogenen Ende übereinstimmend, mit einem geformten Schutzvorsprung (14b) versehen ist, der sich der Seite des Gummischlauches anpasst (12).

3. Gleitschutzketten nach Anspruch 1, dadurch gekennzeichnet, daß die Mittel, die die Umdrehung des Hebels (19) während des gespannten Zustandes der Kette (16) verhindern, eine Vorrichtung enthalten, die in Bezug auf die Umdrehungsachse besagten Hebels (19) außerhalb des Gelenkstückpunktes der Kette (16) liegt.

4. Gleitschutzketten nach einem der vorhergehenden Ansprüche, dadurch gekennzeichnet, daß sie zumindest zwei Ketten enthält, die nebeneinander liegen und die durch die besagten Hakenelemente (14, 15) miteinander verbunden sind.

5. Gleitschutzketten nach einem der vorhergehenden Ansprüche, dadurch gekennzeichnet, daß Mittel zur Anpassung der Länge des Hakens vorgesehen sind, um dadurch den Abstand zwischen den Verbindungspunkten zwischen der Kette (16) und den Hakenelementen zu verändern, und die Bewegung des Gelenkstückes (18) des Ringes entlang der verschiedenen, auf den gerillten Rändern der zwei Seiten des Zughebels (19) vorgesehenen Punkten zu verändern.

6. Gleitschutzketten nach Anspruch 5, dadurch gekennzeichnet, daß genannte Zwischenstücke Gelenkstücke enthalten, die distanziert auf dem Zughebel (19) vorgesehen sind, und außerdem Mittel, um die genannte Kette (16) zum Einrasten mit dem Hebel (19) und zum Ausrasten von dem Hebel (19), den besagten Gelenkpunkten entsprechend, zu bringen.

## Revendications

1. Dispositif antiderapant pour les roues de traction de vehicules, dans le quel une roue (10) comprende une tante (11) de métal à la quelle on applique le pneu (12), ainsi que un premiér élément d'accrochage (14) et un deuxièm élément d'accrochage (15), qui est appliqué sur les deux côtés opposés de la jante (11), sans avoir précédemment modifiée la roue (1), par exemple avec l'insertion d'adapteurs instables entre le pneu (12) et la jante (11), et la soudure de poussoirs sur la jante (11), et au moins une chaîne de liaison (16) pourvue au travers du pneu (12), dite chaîne (16) étant reliée au premièr élément de accrochage (14), respectivement à un levier de traction (19) de façon à former une charnière avec le deuxièm élément d'accrochage (15), ainsi que éléments (23) pour bloquer la rotation du levier de traction (19) dans la condition de tension de la chaîne (16), caractérisé en ce que le deuxièm élément de accrochage (15) est pourvu d'une ailette de stabilisation (21) pour l'engagement avec un trou de ventilation (F) et d'un clou à crochet pour l'engagement avec la circonférence (C) de la jante (11), ou l'ailette de stabilisation (21) est pourvu, à son tour, d'un ressort (22) de façon à déterminer une force répulsive entre le trou (F) et la circonférence (C) du pneu (11).

2. Dispositif antiderapant selon la revendication 1, caractérisé en ce que le premièr élément d'accrochage (14), que s'engage avec le bord intérieur de la jante (11), est prévu en correspondence avec l'exstrémité pliée à former un crochet avec une saillie de protection façonné (14b) que s'adapte au côté de la jante (12).

3. Dispositif antiderapant selon la revendication 1, caractérisé en ce que les moyens puor bloquer la rotation du levier (19) dans la condition de tension de la chaîne (16) comprennent une disposition au de la du point de l'articulation de la chaîne (16) avec la levier de traction (19), par rapport à l'axe de rotation du dit levier (19).

4. Dispositif antiderapant selon une des revendications précédentes, caractérisé en ce qu'il comprend au moins deux chaînes qui sont disposées l'une en proximitée de l'autre et unies au moyen des dits éléments d'accrochage (14, 15).

5. Dispositif antiderapant selon une des revendications précédentes, caractérisé en ce qu'il comprend des éléments d'adaptation de la longueur du crochet pour varier la distance entre le point de liaison entre la chaîne (16) et les éléments d'accrochage, ainsi que le mouvement de l'articulation (18) de l'anneau le long des differents points prévus sur les bords rainés des deux côtés du levier de traction (19).

6. Dispositif antiderapant selon la revendication 5, caractérisé en ce que les éléments dits d'adaptation comprennent des points d'aticulation distancés sur le levier de traction (19), ainsi que des éléments pour engager et disengager la dite chaîne (16) avec et du dit levier (19) en correspondance des dits points des articulations.
